# EUROPEAN PATENT SPECIFICATION

(11) **EP 3 875 413 B1**
(45) Date of publication and mention of the grant of the patent: **17.01.2024**
(21) Application number: 20160457.6
(22) Date of filing: 02.03.2020
(51) Int. Cl.: B65H 75/44, B29D 29/08

(54) **HOSE BOX**
SCHLAUCHKASTEN
BOÎTIER DE TUYAU

(43) Date of publication of application: 08.09.2021
(73) Proprietor: HUSQVARNA AB, 561 82 Huskvarna (SE)
(72) Inventor: Mack, Tobias, 89081 Ulm (DE); Schlegel, Tobias, 89171 Illerkirchberg (DE); Steck, Reinhold, 89275 Elchingen (DE); Treß, Thomas, 89614 Öpfingen (DE)
(74) Representative: Finkele, Rolf

(56) References cited:
- WO-A1-2018/075365
- WO-A1-2018/213878
- CN-A- 108 561 504

## Description

### TECHNICAL FIELD

The present disclosure relates to a hose box. More specifically, the present disclosure relates to the hose box which provides an ergonomic profile of ease of handling of a hose.

### BACKGROUND

A hose box is a device fitted outdoors or indoors to hold a hose. The wound hose may be taken out of the hose box as per the requirements. Generally, the hose box includes an apparatus to allow mechanical winding or unwinding of the hose. The hose box may have some additional sources to provide mechanical assistance for the adjustments of the hose.

However, there may be instances where the apparatus for mechanical winding or unwinding of the hose may be bulky or uncompacted. Working with the hose box may include unrequired length of a belt (necessary) to drive a hose guide. Generally, placing of a gear to the central axis of the hose may require long belt to drive the hose guide.

An example of a hose box is provided in German patent application 4,407,195 (hereinafter referred to as **'195** reference). The **'195** reference provides a cable reel for a small mobile device. The cable reel includes a cable drum. An axis of the cable drum is arranged horizontally mounted on the small mobile device such that it can pivot about a vertical axis. The cable drum is driven by a separate electric motor which is supplied via a cable of the cable drum, in parallel with the drive motor of the small mobile device. A switching-off device switches the electric motor off when the cable which is wound up by the cable drum, is stressed taut. The cable is guided onto the cable drum via a guidance device. The guidance device is moved in a reciprocating manner, over the width of the cable drum, by the electric motor. However, the '**195** reference seems short of disclosing a simple, compact arrangement for winding of the cable.

WO 2018/213878 A1 discloses a hose box according to the preamble of claim 1.

Thus, there is a need of an improved hose box which allows an ease of handling a hose. Further, it would be an added benefit if the hose box allows compact arrangement of all components required to drive a hose guide.

### SUMMARY

In view of the above, it is an objective of the present invention to solve or at least reduce the drawbacks discussed above. The objective is at achieved by a hose box according to claim 1.

The hose box includes a hose guide pulley. The hose guide pulley allows a lateral movement of a hose guide to wind a hose within the hose box. A first pulley is drivingly coupled to the hose box. The hose box further includes a belt-drive. The belt-drive is operatively coupled with the first pulley and the hose guide pulley. The hose box is characterized in that an annular gear rotates during winding of the hose around a central axis and operatively coupled to the first pulley. The first pulley is disposed at a radial offset from the central axis of the hose box. Thus, the present disclosure provides a compact and user-friendly hose box.

According to an embodiment of the present invention, the first pulley is located between the hose guide pulley and the central axis of the hose box. The positioning of the first pulley may allow reduction of length of the belt-drive.

According to an embodiment of the present disclosure, the hose box includes a control unit. This may allow an automatic check on motion of the belt-drive.

According to an embodiment of the present invention, the belt-drive is made of a material selected from one or more of polymers, plastics, and metals. This may provide the belt-drive with characteristic features such as flexibility, cost efficiency, and heat resistant properties.

According to an embodiment of the present invention, the belt-drive is one or more of a toothed belt, a V-belt, a round belt, and a flat belt. This may allow better delivery of power necessary for proper functioning of the hose guide.

According to an embodiment of the present invention, the hose guide pulley is constructed to deflect and guide the hose to the direction of the hose guide moves. This may provide an efficient pulling out of the hose out of the hose box.

According to an embodiment of the present invention, the hose box further includes a stopper. This may allow the user to hold the hose.

According to an non-claimed embodiment of the present disclosure, a belt-drive for a hose box is provided. This may allow to transmit power more efficiently.

According to an non-claimed embodiment of the present disclosure, the belt-drive is manufactured by three-dimensional printing. Use of three-dimensional printing (alternatively, 3D printing) provides versatility of using different materials along with reduced lead-time in manufacturing and design of the belt-drive.

According to an non-claimed embodiment of the present disclosure, a data file is provided having pre-stored instructions to print the belt-drive using a three-dimensional (3-D) printer. This may allow to manufacture the belt-drive using three-dimensional printing.

According to an non-claimed embodiment of the present disclosure, the belt-drive is presented in digital format. This may help in customization of the belt-drive.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a conventional hose box;
**FIG. 2** shows a partial side cross-sectional view of some relevant part of the spooling mechanics of the conventional hose box;
**FIG. 3** shows a perspective view of a belt-drive system of the hose box, in accordance with an aspect of the present disclosure; and
**FIG. 4** shows a perspective view of a first pulley of the belt-drive system of the hose box, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

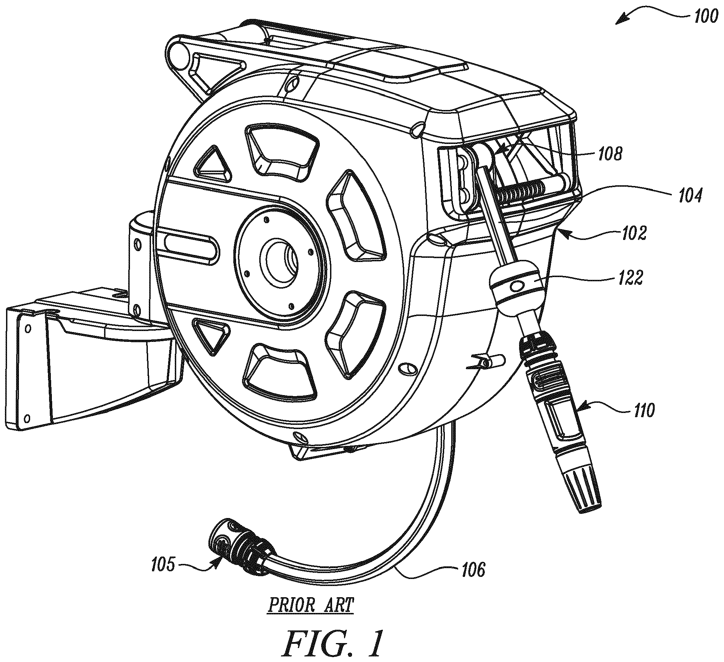

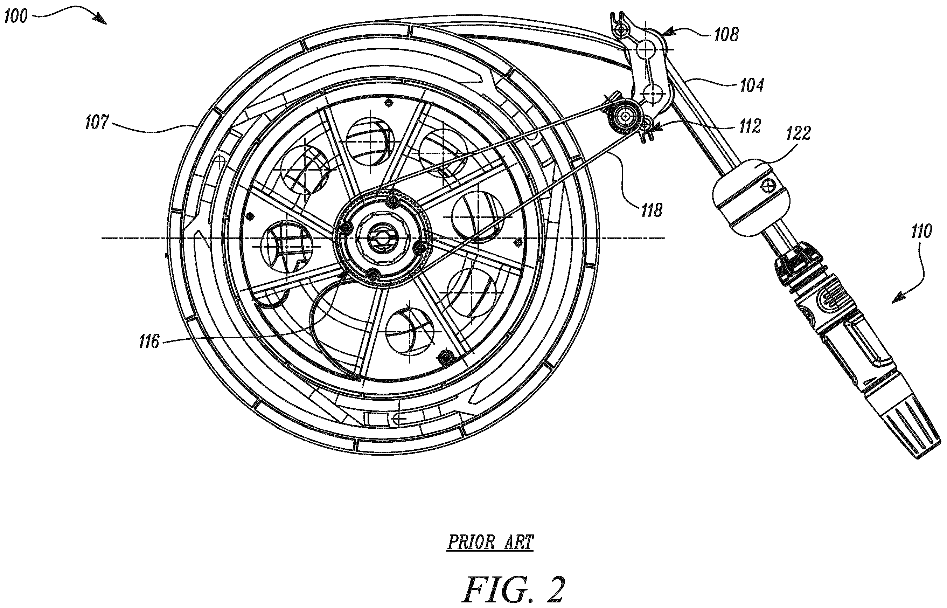

**FIG. 1** illustrates a conventional hose box **100** as per the present disclosure. The conventional hose box **100** may be fitted outdoor or indoor, especially in gardens, hospitals, malls to bring folded hose into function as per the requirements. The conventional hose box **100** may be fixed or attached to a wall or a ground surface. This makes the conventional hose box **100** widely usable in outdoor and indoor applications. The conventional hose box **100** includes a housing **102**. The conventional hose box **100** further includes a hose **104** wound on a reel **107** (shown in **FIG. 2**). In the depicted example the hose **104** is connected to a nozzle **110.** To supply water to the conventional hose box **100** and thus the hose **104,** a water supply hose **106** with a connector **105** is provided at the other extreme end of the conventional hose box **100**. The connector **105** may be connected to any water source such as, but not limited to a tap, a hose, or a tank. The hose **104** is further connected to a stopper **122** that limits the automatic winding of the hose **104** onto the reel **107.** Moreover, the conventional hose box **100** includes a hose guide 108.

**FIG. 2** illustrates a partial side cross-sectional view of some relevant part of the spooling mechanics of the conventional hose box **100** together with a partial view of the hose **104** to be wound onto the reel **107**. The conventional hose box **100** includes a hose guide pulley **112**. The hose guide pulley **112** is drivingly coupled with the hose guide **108**. The hose guide pulley **112** allows winding of the hose **104** within the conventional hose box **100**. In the depicted example, the hose **104** is connected to the nozzle **110** at one end of the hose **104**. Further, the conventional hose box **100** includes a first pulley **116** which is drivingly coupled to the reel **107** and parallel to the reel **107** rotates about rotational axis of the first pulley **116**. A belt-drive **118** drivingly couples the first pulley **116** with the hose guide pulley **112**. In a preferred embodiment the conventional hose box **100** also includes the stopper **122** to limit a length of the hose **104**.

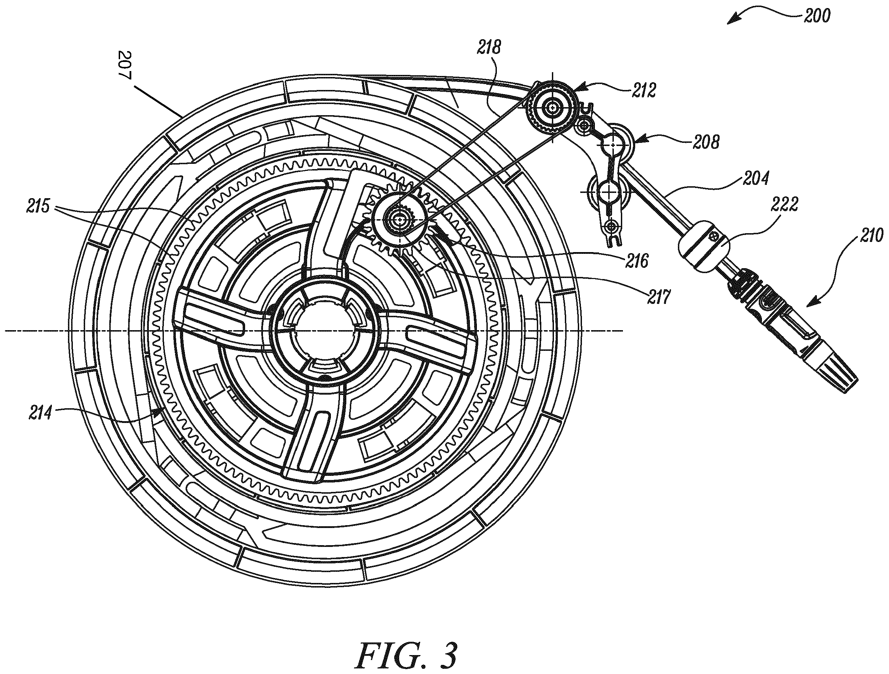

**FIG. 3** illustrates a partial side view inside a hose box **200** according to the present disclosure. The hose box **200** includes a hose guide pulley **212**. The hose guide pulley **212** is constructed to be drivingly connected to a hose guide **208** that guides a hose **204**. The hose **204** is connected to a nozzle **210**. The hose guide pulley **212** allows a lateral movement of the hose guide **208** to wind the hose **204** within the hose box **200**. A first pulley **216** is drivingly coupled to a reel **207**. The first pulley **216** includes a built-in belt pulley **217**. The first pulley **216** and the built-in belt pulley **217** are drivingly coupled with the hose guide pulley **212** via a belt-drive **218**. The reel **207** is connected to an annular gear **214**. The annular gear **214** rotates during winding of the hose **204** around the rotational axis of the reel **207**. The first pulley **216** is disposed at a radial offset from the central axis of the hose box **200** with the first pulley **216** being operatively coupled with the annular gear **214**. The hose box **200** of the present disclosure has been shown without any housing in the present figure from clarity and explanation considerations. The hose box **200** may be assembled with any housing such as the housing **102**, in accordance with implementation needs of the present disclosure.

As illustrated in **FIG. 3**, the first pulley **216** is located between the hose guide pulley **212** and the rotational axis of the reel **207**. More preferably, the first pulley **216** is meshing with annular teeth **215**. The position of the first pulley **216** allows reduction of a belt-drive length. This positioning of the first pulley **216** helps in saving materials and cost required for preparation of the belt-drive **218**.

In some embodiments, the belt-drive **218** may be a round belt, a flat belt, a V-belt, a toothed belt. This allows better delivery of power necessary for proper functioning of the hose guide **208**. Additionally, or alternatively, the hose guide pulley **212** and the built-in belt pulley **217** may be drivingly coupled by a roller chain, a detachable chain, a pintle chain, a silent chain, a leaf chain, a laminated metal chain and the like.

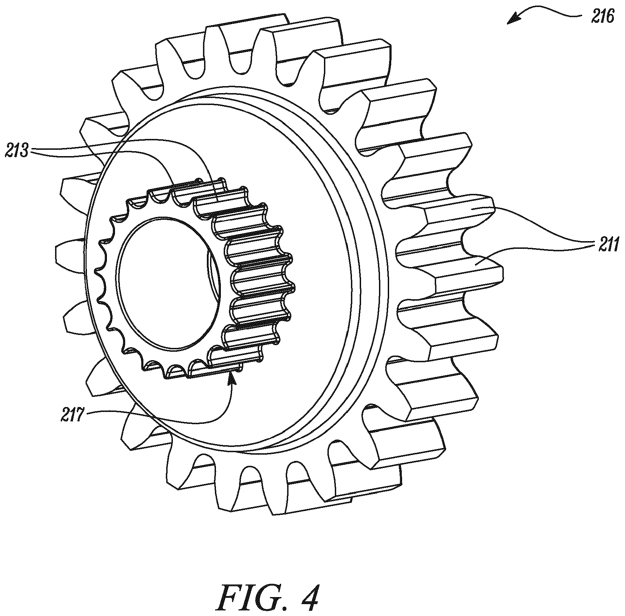

**FIG. 4** illustrates an embodiment of the first pulley **216** which includes a reel drive geometry **211** and a belt drive geometry **213**. The belt drive geometry **213** is provided on the built-in belt pulley **217**. The reel drive geometry 211 is engaged or meshed with the annular teeth **215**. The reel drive geometry **211** and the annular teeth **215** are drivingly coupled with each other. The belt drive geometry **213** is further drivingly coupled with the belt-drive **218**.

During operation to wind the hose **204**, the annular gear **214** starts to move. The movement generated in the annular gear **214** further provides mechanical assistance to the first pulley **216**. The belt-drive **218** provides a link between the built-in belt pulley **217** and the hose guide pulley **212**. Movement of the first pulley **216** is in line with the movement of the built-in belt pulley **217**, thus corresponding to motion of the hose guide pulley **212**.

The belt-drive **218** may be manufactured using any material, such as polymers, metals, plastics, and the like. This provides the belt-drive **218** with characteristic features such as flexibility, cost efficiency, heat resistant properties. These properties eventually aim to move the hose guide pulley **212**. The belt-drive **218** may be manufactured using any process, such as casting, molding, forging, fabrication, and the like.

In some embodiments, the belt-drive **218** may be manufactured by three-dimensional printing (also known as additive manufacturing or 3D printing). Use of three-dimensional printing (alternatively, 3D printing) provides versatility of using different materials along with low lead-time in manufacturing and design of the belt-drive **218**. A data file is provided having pre-stored instructions to print the belt-drive **218** using a three-dimensional (3D) printer. This allows to manufacture the belt-drive **218** using three-dimensional printing. The belt-drive **218** is presented in digital format. This helps in customization of the belt-drive **218**

In some embodiments, a counter may be provided with the hose box **200**. The counter indicates the number of feet by which the hose **204** has been extended from the hose box **200**. The counter makes the user aware about the length of rest of the hose **204** left in the hose box **200**.

A stopper **222** helps to limit the winding of the hose **204** into the hose box **200**. The stopper **222** may prevent the complete winding of the hose **204**. In particular, the stopper **222** may prevent complete back winding of the hose **204** into the hose box **200**.

Additionally, or alternatively, the hose box **200** may be fixed or attached to a wall or a ground surface. This makes the hose box **200** widely usable in outdoor and indoor applications such as gardens, parks, buildings.

In an embodiment, the belt-drive **218** may be automatically controllable. The hose box **200** may have a control unit which may be configured to actuate actuators and/or sensors of the hose box **200**. The control unit may instruct the actuators and/or sensors to process signal and move the belt-drive **218**, thereby moving the hose guide pulley **212**. A feedback loop may continuously monitor and adjust a hose length coming out of the hose box **200**.

In some embodiments, the belt-drive **218** may be removably assembled to the first pulley **216** and the hose guide pulley **212**. This may allow replacement of the belt-drive **218** during service time or as per the application requirements. Additionally, or alternatively, the belt-drive **218** may be rooted to the first pulley **216** and the hose guide pulley **212** which provides mechanical strength to the hose box **200**.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Conventional Hose Box
- **102**: Housing
- **104**: Hose
- **106**: Water Supply Hose
- **107**: Reel
- **108**: Hose Guide
- **110**: Nozzle
- **112**: Hose Guide Pulley
- **116**: First pulley
- **118**: Belt-Drive
- **122**: Stopper
- **200**: Hose Box
- **204**: Hose
- **207**: Reel
- **208**: Hose Guide
- **210**: Nozzle
- **211**: Reel Drive Geometry
- **212**: Hose Guide Pulley
- **213**: Belt Drive Geometry
- **214**: Annular Gear
- **215**: Annular Teeth
- **216**: First pulley
- **217**: Built-in Belt Pulley
- **218**: Belt-Drive
- **222**: Stopper

## Claims

1. A hose box (**200**) comprising:
a hose guide pulley (**212**) adapted to allow a lateral movement of a hose guide (**208**) to wind a hose (**204**) within the hose box (**200**);
a first pulley (**216**) drivingly coupled to a reel (207);
a belt-drive (**218**) adapted to operatively couple the first pulley (**216**) and the hose guide pulley (**212**); and
an annular gear (**214**) connected to the reel (207) and adapted to rotate during winding of the hose (**204**) around a central axis and operatively coupled to the first pulley (**216**),
**characterized in that:**
wherein the first pulley (**216**) is disposed at a radial offset from the central axis of the hose box (**200**),
wherein the first pulley (**216**) includes a built-in belt pulley (**217**) such that the first pulley (**216**) and the built-in belt pulley (**217**) are drivingly coupled with the hose guide pulley (**212**) via the belt-drive (**218**).

2. The hose box (**200**) of claim **1**, wherein the first pulley (**216**) is located between the hose guide pulley (**212**) and the central axis of the hose box (**200**).

3. The hose box (**200**) of any of the preceding claims, the hose box (**200**) further includes a control unit.

4. The hose box (**200**) any of the preceding claims, wherein the belt-drive (**218**) is made of a material selected from one or more of polymers, plastics, and metals.

5. The hose box (**200**) any of the preceding claims, wherein the belt-drive (**218**) is one or more of a toothed belt, a v-belt, a round belt, a flat belt.

6. The hose box (**200**) any of the preceding claims, wherein the hose guide pulley (**212**) is constructed to deflect and guide the hose (**204**) to a direction of the hose guide (**208**) moves.

7. The hose box (**200**) any of the preceding claims, the hose box (**200**) further includes a stopper (**222**).

## Patentansprüche

1. Schlauchkasten **(200)**, umfassend:
eine Schlauchführungsscheibe **(212)**, die angepasst ist, um eine seitliche Bewegung einer Schlauchführung **(208)** zu ermöglichen, um einen Schlauch **(204)** innerhalb des Schlauchkastens **(200)** zu wickeln;
eine erste Scheibe **(216)**, die mit einer Spule (207) antriebsmäßig gekoppelt ist;
einen Riemenantrieb **(218)**, der angepasst ist, um die erste Scheibe **(216)** und die Schlauchführungsscheibe **(212)** wirkzukoppeln; und
einen Zahnring **(214)**, der mit der Spule (207) verbunden ist und
angepasst ist, um sich während des Wickelns des Schlauchs **(204)** um eine Mittelachse herum zu drehen
und mit der ersten Scheibe **(216)** wirkgekoppelt ist,
**dadurch gekennzeichnet, dass:**
wobei die erste Scheibe (216) an einem radialen Versatz von der Mittelachse des Schlauchkastens **(200)** angeordnet ist,
wobei die erste Scheibe **(216)** eine eingebaute Riemenscheibe **(217)** derart einschließt, dass die erste Scheibe **(216)** und die eingebaute Riemenscheibe **(217)** mit der Schlauchführungsscheibe **(212)** über den Riemenantrieb **(218)** antriebsmäßig gekoppelt sind.

2. Schlauchkasten **(200)** nach Anspruch **1**, wobei sich die erste Scheibe **(216)** zwischen der Schlauchführungsscheibe **(212)** und der Mittelachse des Schlauchkastens **(200)** befindet.

3. Schlauchkasten **(200)** nach einem der vorstehenden Ansprüche, wobei der Schlauchkasten **(200)** ferner eine Steuereinheit einschließt.

4. Schlauchkasten **(200)** nach einem der vorstehenden Ansprüche, wobei der Riemenantrieb **(218)** aus einem Material hergestellt ist, das aus einem oder mehreren von Polymeren, Kunststoffen und Metallen ausgewählt ist.

5. Schlauchkasten **(200)** nach einem der vorstehenden Ansprüche, wobei der Riemenantrieb **(218)** eines oder mehrere von einem Zahnriemen, einem Keilriemen, einem Rundriemen, einem Flachriemen ist.

6. Schlauchkasten **(200)** nach einem der vorstehenden Ansprüche, wobei die Schlauchführungsscheibe **(212)** aufgebaut ist, um den Schlauch **(204)** in eine Richtung von Bewegungen der Schlauchführung **(208)** abzulenken und zu führen.

7. Schlauchkasten **(200)** nach einem der vorstehenden Ansprüche, wobei der Schlauchkasten **(200)** ferner einen Anschlag **(222)** einschließt.

## Revendications

1. Boîtier pour tuyau (**200)** comprenant :
une poulie de guidage de tuyau (212) conçue pour permettre un mouvement latéral d'un guide de tuyau (208) pour enrouler un tuyau (**204)** au sein du boîtier pour tuyau (200) ;
une première poulie (**216)** accouplée par entraînement à une bobine (207) ;
un entraînement par courroie (**218)** conçu pour accoupler de manière fonctionnelle la première poulie **(216**) et la poulie de guidage de tuyau (**212)** ; et
un engrenage annulaire (**214)** relié à la bobine (207) et
conçu pour tourner pendant l'enroulement du tuyau (**204)** autour d'un axe central
et accouplé de manière fonctionnelle à la première poulie (**216)**,
**caractérisé en ce que :**
dans lequel la première poulie (**216)** est disposée au niveau d'un décalage radial par rapport à l'axe central du boîtier pour tuyau **(200**),
dans lequel la première poulie (**216)** comporte une poulie à courroie intégrée **(217)** de telle sorte que la première poulie **(216)** et la poulie à courroie intégrée **(217)** sont accouplées par entraînement avec la poulie de guidage de tuyau (**212)** par l'intermédiaire de l'entraînement par courroie (218).

2. Boîtier pour tuyau (**200)** selon la revendication **1**, dans lequel la première poulie **(216)** est située entre la poulie de guidage de tuyau (**212)** et l'axe central du boîtier pour tuyau **(200**).

3. Boîtier pour tuyau (**200)** selon l'une quelconque des revendications précédentes, le boîtier pour tuyau (**200)** comporte en outre une unité de commande.

4. Boîtier pour tuyau (**200)** selon l'une quelconque des revendications précédentes, dans lequel l'entraînement par courroie **(218**) est constitué d'un matériau choisi parmi un ou plusieurs parmi des polymères, des plastiques et des métaux.

5. Boîtier pour tuyau (**200)** l'une quelconque des revendications précédentes, dans lequel l'entraînement par courroie **(218)** est une ou plusieurs parmi une courroie crantée, une courroie trapézoïdale, une courroie ronde, une courroie plate.

6. Boîtier pour tuyau (**200)** l'une quelconque des revendications précédentes, dans lequel la poulie de guidage de tuyau (**212)** est construite pour dévier et guider le tuyau (**204)** dans une direction dans laquelle le guide de tuyau (**208)** se déplace.

7. Boîtier pour tuyau (**200)** selon l'une quelconque des revendications précédentes, le boîtier pour tuyau (**200)** comporte en outre une butée **(222**).
